(19) **Europäisches Patentamt / European Patent Office / Office européen des brevets**

(11) **EP 2 239 620 B1**

(12) **EUROPEAN PATENT SPECIFICATION**

(45) Date of publication and mention
of the grant of the patent:
**12.06.2019 Bulletin 2019/24**

(51) Int Cl.:
*G02F 1/225* (2006.01)  *G02F 1/01* (2006.01)

(21) Application number: **09706924.9**

(86) International application number:
**PCT/JP2009/000301**

(22) Date of filing: **27.01.2009**

(87) International publication number:
**WO 2009/096170 (06.08.2009 Gazette 2009/32)**

(54) **OPTICAL PULSE GENERATOR**

OPTISCHER PULSGENERATOR

GENERATEUR D'IMPULSIONS OPTIQUES

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.01.2008 JP 2008015911**

(43) Date of publication of application:
**13.10.2010 Bulletin 2010/41**

(73) Proprietor: **National Institute of Information and Communications Technology**
**Tokyo 184-8795 (JP)**

(72) Inventors:
• **SAKAMOTO, Takahide**
**Koganei-shi**
**Tokyo 184-8795 (JP)**
• **KAWANISHI, Tetsuya**
**Koganei-shi**
**Tokyo 184-8795 (JP)**
• **TSUCHIYA, Masahiro**
**Koganei-shi**
**Tokyo 184-8795 (JP)**
• **IZUTSU, Masayuki**
**Koganei-shi**
**Tokyo 184-8795 (JP)**

(74) Representative: **CSY Herts**
**Helios Court**
**1 Bishop Square**
**Hatfield, Hertfordshire AL10 9NE (GB)**

(56) References cited:
EP-A1- 0 387 832    JP-A- 8 086 991
JP-A- 11 183 946    JP-A- 2003 202 530

• **TAKAHIDE SAKAMOTO ET AL: "Electro-Optic Ultra-Flat Comb Generation Using Mach-Zehnder Modulator in Push-Pull Operation Mode", LASERS AND ELECTRO-OPTICS SOCIETY, 2007. LEOS 2007. THE 20TH ANNUAL ME ETING OF THE IEEE, IEEE, PI, 1 October 2007 (2007-10-01), pages 525-526, XP031160685, ISBN: 978-1-4244-0924-2**
• **TAKAHIDE SAKAMOTO ET AL: "Picosecond Pulse Generation with a Single-Stage Standard Mach-Zehnder Modulator Employed", PROCEEDINGS / ECOC 2006, 32ND EUROPEAN CONFERENCE ON OPTICAL COMMUNICATION : 24 - 28 SEPTEMBER 2006, CANNES, FRANCE, SEE, PARIS, FRANCE, 24 September 2006 (2006-09-24), pages 1-2, XP031437537, ISBN: 978-2-912328-39-7**
• **SAKAMOTO T ET AL: "Asymptotic formalism for ultraflat optical frequency comb generation using a Mach-zehnder modulator", OPTICS LETTERS OPT. SOC. AMERICA USA, vol. 32, no. 11, 1 June 2007 (2007-06-01), pages 1515-1517, XP002671918, ISSN: 0146-9592**
• **NICOLAS K FONTAINE ET AL: "Characterization of dual-electrode Mach-Zehnder modulator based optical frequency comb generator in two regimes", 2008 IEEE LEOS ANNUAL MEETING CONFERENCE PROCEEDINGS : NEWPORT BEACH, CALIFORNIA, USA, 9 - 13 NOVEMBER 2008, IEEE, PISCATAWAY, NJ, USA, 9 November 2008 (2008-11-09), pages 186-187, XP031366164, ISBN: 978-1-4244-1931-9**

EP 2 239 620 B1

**(Cont. next page)**

- **TAKAHIDE SAKAMOTO ET AL.:** **'Mach-Zehnder-gata Hikari Henchoki o Mochiita Cho Heitan Hikari Shuhasu Comb Hassei no Tameno Joken' IEICE TECHNICAL REPORT vol. 105, no. 380, 28 October 2005, pages 49 - 53, XP008138489**

- **M. IZUTSU ET AL.: 'Picosecond pulse respose of broad-band guided-wave interferometric light modulators' IEEE JOURNAL OF QUANTUM ELECTRONICS vol. QE-19, no. 4, April 1983, pages 668 - 674, XP008138503**

Description

Field of Invention

The present invention relates to an optical pulse generator comprising an ultra-flat optical frequency comb signal generator that generates an optical frequency comb signal with high flatness using a Mach-Zehnder optical modulator. More specifically, the optical frequency comb generator that can generate an optical frequency comb simply and stably even if a single modulated signal is used.

Description of the Related Art

Recently, there have been high expectations for optical frequency comb generation technique that has the function of simultaneously generating a plurality of optical frequency components having the same frequency intervals. Such an optical frequency comb generator that can generate an optical frequency comb can be applied as a wavelength multiplexing light source in optical wavelength division multiplexing system or a short-pulse light source for ultrahigh-speed optical transmission/optical measurement. Furthermore, the application of an optical frequency comb generator to an optical frequency reference for absolute frequency measurement, remote supply of local signals in microwave/millimeter-wave frequency bands has also been considered (W. D. Jemison et al., MWP' 01, pp. 169-172, 2001). Also, the use of an optical frequency comb generator as a control signal for an allay antenna used in an astronomical observation system such as a wireless telescope has also been considered (J. M. Payne and W. P. Shillue, MWP' 02, pp. 9-12, 2002).

As a method for generating an optical frequency comb, the use of optical modulation technique such as $LiNbO_3$ in addition to the use of a mode-locked laser using semiconductors or optical fibers has been considered (For example, see Non-Patent Documents 1-3 as indicated below).

An optical frequency comb ideally has flat spectral properties. Namely, respective frequency components ideally have the same optical intensity. Even if an optical frequency comb is generated using a $LiNbO_3$ modulator, it is a critical issue to obtain an optical frequency comb having flat spectral properties. If a $LiNbO_3$ modulator is driven using drive signals having large amplitude, phase modulated light can be obtained by an electro-optic effect. Though, as a result, an optical frequency comb can be obtained, the optical intensity of high-order modulation components of the generated optical signal follows Bessel function corresponding to respective degrees. Bessel function is a quasi-periodic function with different phases depending on orders. Therefore, there is a problem that the optical intensity of respective frequency components of phase modulated light largely depends on the amplitude of drive signals and thus it is hard to obtain flat spectral properties.

On the other hand, a method to generate an optical frequency comb signal having flat spectral properties by a combination of an optical phase modulator and an optical intensity modulator has been suggested. The method drives both an optical phase modulator and an optical intensity modulator by synchronizing signals of the same frequency and drives a first-stage optical phase modulator by large amplitude signals and generate high-order modulated components, and subsequently intensity modulation is carried out by a directly-connected latter-stage modulator. The sideband components formed from respective frequency components of phase modulated light interfere with neighboring-order frequency components, which lessens the deviation of an optical spectrum. Furthermore, by controlling optical intensity on the time axis, only the nonlinear chirp of phase modulated light is selectively formed.

However, though an optical frequency comb with high spectral flatness can be obtained by the above conventional methods, they require the synchronizing drive with two directly-connected optical modulators. Thus, there is a problem of more complicated configuration of an optical frequency comb generator.

Consequently, the present inventors have developed an optical frequency comb generator having the same optical frequency intervals and flat optical spectral properties, by driving both arms of a single Mach-Zehnder optical modulator by large amplitude sinusoidal signals of different amplitudes and by setting the intensity of a resulting vector of respective frequency components of the comb generated by the adjustment of drive voltage.

As the optical frequency comb generator can generate an optical frequency comb signal only using a single Mach-Zehnder optical modulator, it is an easy-to-use and very excellent device. However, the optical frequency comb generator also has a problem that it requires two types of modulated signals so as to drive both arms of a single Mach-Zehnder optical modulator by large amplitude sinusoidal signals of different amplitudes.

Non-Patent Document 1: M. Sugiyama et al., OFC'02, FB6, 2002
Non-Patent Document 2: T. Sakamoto et al., MWP'04, MC16, 2004
Non-Patent Document 3: T. Kawanishi et al., IEICE Electron Express, Vol. 1, pp. 217-221, 2004

Takahide Sakamoto et al.: "Electro- Optic Ultra- Flat Comb Generation Using Mach- Zehnder Modulator in Push- Pull Operation Mode", LEOS 2007, 1 October 2007, pages 525-526- & Takahide Sakamoto et al.: "Asymptotic formalism for ultraflat optical frequency comb generation using a Mach-Zehnder modulator", Optics Letters, vol. 32, no. 11, 1 June 2007, pages 1515-1517 describes an ultra-flat frequency comb generation using a "push-pull" operated Mach-Zehnder modulator (MZM), where the MZM is dual driven with out-of-phase signals having different amplitudes.

EP 0 387 832 A1 (Fujitsu Limited) describes a Mach-Zehnder interferometer type modulator, constructed of a first and second optical waveguide, a first and second electrode cooperating with the same, and a driving voltage source, wherein the driving voltage source is constructed of a first and second driving unit which drive independently the first and second electrodes in accordance with data input and wherein the first and second driving units apply first and second driving voltages, individually determined, to the first and second electrodes.

Takahide Sakamoto et al.: "Picosecond Pulse Generation with a Single-Stage Standard Mach-Zehnder Modulator Employed", ECOC 2006, 24 - 28 September 2006, pages 1-2 describes a picosecond pulse generator using a single-stage conventional Mach-Zehnder modulator that generates ultra-flat frequency comb.

### Disclosure of the Invention

According to an aspect of the present invention there is provided an optical pulse generator as set out in the appended claims.

The example described herein is basically based on a knowledge that an optical frequency comb having flat spectral properties can be obtained even with the use of a single modulated signal, by making the length of a first modulated electrode (15) provided along a first waveguide (4) of a Mach-Zehnder optical modulator and that of a second modulated electrode (16) provided along a second waveguide (5) different from each other, or by displacing the position of either or of both of the first waveguide (4) and the second waveguide (5) so that they are positioned asymmetrically with respect to the position where modulation efficiency is maximum. As an optical phase modulator is originally to modulate the phase of an input signal, it is respected that only the signals with the phases of the input optical signals modulated by a predetermined amount are output. However, an optical phase modulator generates a plurality of frequencies of optical spectra as noise other than signals modulated by a predetermined amount. And the intensity of the plurality of frequency components follows Bessel function. Therefore, by multiplexing the optical signals output from two optical phase modulators, effectively using respective frequency components output as noise and appropriately compensating the optical intensity of respective frequency components, an optical frequency comb having a flat spectral property can be obtained even with the use of a single optical modulator.

In order to obtain an optical frequency comb, an optical signal may be adjusted so that the output from both arms of a Mach-Zehnder modulator may be an optical frequency comb signal if multiplexed. The example described herein, from such a standpoint, applies bias signals or modulated signals, and also adjusts the length of modulated electrodes provided on respective arms or places waveguides asymmetrically.

Specifically, an optical frequency comb generator of the example described herein comprises: a waveguide part (8) comprising an optical input part (2), a branching part (3) for branching light from the optical input part, a first waveguide (4) through which light branched by the branching part (3) propagates, a second waveguide (5) through which other light branched by the branching part (3) propagates, a multiplexing part (6) for multiplexing optical signals output from the first waveguide and the second waveguide, and an optical signal output part (7) for outputting optical signals multiplexed by the multiplexing part; a drive signal system (11) for obtaining a first drive signal (9) for driving the first waveguide and a second drive signal (10) for driving the second waveguide; and a bias signal system (14) for obtaining bias signals (12,13) applied to the first waveguide and the second waveguide, wherein the first drive signal (9) and the second drive signal (10) are obtained from one drive signal system (11), wherein the length $l_1$ of a first modulated electrode (15) provided along the first waveguide (4) and the length $l_2$ of a second modulated electrode (16) provided along the second waveguide (5) are different from each other, and wherein the drive signal system (11) and the bias signal system (14) drive the first drive signal (9), the second drive signal (10) and the bias signals (12,13) in accordance with the following Formula (I):

$$\Delta A - \Delta \theta = \pi/2 \qquad (I)$$

(where $\Delta A$ and $\Delta \theta$ are defined, respectively, as $\Delta A \equiv (A_1 - A_2)/2$ and $\Delta \theta \equiv (\theta_1 - \theta_2)/2$ and $A_1$ and $A_2$ indicate, respectively, optical phase shift amplitudes induced by the first drive signal and the second drive signal when input into the electrodes, and $\theta_1$ and $\theta_2$ indicate, respectively, optical phase shift amounts induced within the first waveguide and the second waveguide.) As used herein, the optical phase shift amplitude ($A_1$) induced by the first drive signal is also simply referred to as amplitude of the first drive signal, and the optical phase shift amplitude ($A_2$) induced by the second drive signal is also simply referred to as amplitude of the second drive signal. Furthermore, the term "amplitude of a drive signal" as used herein refers to optical phase shift amplitude induced by a drive signal according to the context.

As described later, by driving in order to the above Formula (I), an optical frequency comb having flat spectral properties with mutually complemented optical signals from two multiplexed phase modulators (the phase modulators are made up of waveguides and electrodes where drive signals are applied) can be obtained.

Also described herein is an optical frequency comb generator as described above, wherein the drive signal system (11) and the bias signal system (14) drive the first drive signal (9), the second drive signal (10), and the bias signals (12,13) in accordance with the following Formula (II) instead of the above Formula (I):

$$\Delta A = \Delta\theta = \pi/4 \qquad \text{(II)}$$

(where $\Delta A$ and $\Delta\theta$ are defined synonymously above)

As Formula (II) meets Formula (I), by driving the signals in accordance with Formula (II), an optical frequency comb having flat spectral properties can be obtained. Furthermore, as described later, by driving in accordance with Formula (II), an optical frequency comb having flat spectral properties can effectively be obtained.

In general, a dual-drive optical modulator uses two drive signals with the same amplitude. However, in the present invention, drive signals are configured to obtain an optical frequency comb having flat spectral properties. Thus, the two drive signals are controlled to meet the predefined condition.

An exampleof an optical frequency comb generator described herein is an optical frequency comb generator as described in any of above, wherein the waveguide part (8) is a Mach-Zehnder waveguide.

A Mach-Zehnder waveguide, and an optical modulator (Mach-Zehnder modulator) comprising a Mach-Zehnder waveguide and a drive signal system, are known. Therefore, an optical frequency comb generator can easily be produced using a known Mach-Zehnder waveguide and a drive signal system. Each of the two post-branch waveguides consisting of a Mach-Zehnder waveguide is also referred to as "arm". A Mach-Zehnder waveguide comprises approximately hexagonally-shaped waveguides (they make up two arms), for example, and is made up with two parallel phase modulators. A phase modulators can be attained by an electrode along a waveguide.

The amounts of optical phase shift induced by both arms in a Mach-Zehnder waveguide are different, and thus frequency period against the applied voltage of frequency components induced in each arm is also different. By controlling drive voltage so that the frequency phase difference against the drive voltage may become 90 degrees between both arms and thus configuring the resulting vector intensity of the generated respective frequency components to a constant value, frequency dependency of optical intensity at the multiplexed optical spectrum can be lessened. As a result, a flat optical frequency comb can be obtained.

Also described herein is an optical frequency comb generator as described in any of above, wherein the first modulated electrode (15) and the second modulated electrode (16) are electrically connected, wherein the drive signal system (11) drives modulated signals so that drive signals are input into the second modulated electrode (16) and the modulated signals output from the second modulated electrode (16) are input into the first modulated electrode (15) and the modulated signals applied to the second modulated electrode (16) and the modulated signals applied to the first modulated electrode are of the same phase. Even in this case, modulation efficiency can be adjusted by adjusting the length of the first modulated electrode (15) and that of the second modulate electrode (16). Also, modulation efficiency can be adjusted by adjusting the cross-section structure of the electrodes. In this way, drive signals from the drive signal system (11) are input into the second modulated electrode (16) and the modulated signals output from the second modulated electrode (16) are input into the first modulate electrode (15), thereby improving power efficiency by around 3dB.

Also described herein is an optical frequency comb generator as described in any of above, wherein the waveguide part (8) is provided on a domain inverted ferroelectric crystal substrate. As the use of a domain inverted (crystal-axis inverted structure) ferroelectric crystal (LN crystal) can apply in-phase and the same coded modulation to each waveguide, phase shift can be added to the ends of electrodes from one electrode, thereby generating a comb at one electrode only.

Also described herein is a usage mode of the optical frequency comb generator comprising: an optical frequency comb generator as described in any of above, a bandpass filter (22) into which output from the optical frequency comb generator is input, and a distributed fiber (23) into which output from the bandpass filter is input. Namely, an ultrashort pulse laser such as a picosecond pulse laser or a femtosecond pulse laser can easily be obtained only by connecting a bandpass filter and an optical fiber to the above optical frequency comb generator.

Also described herein is an optical frequency comb generator comprising: a waveguide part (8) comprising an optical input part (2), a branching part (3) for branching light from the optical input part, a first waveguide (4) through which light branched by the branching part (3) propagates, a second waveguide (5) through which other light branched by the branching part (3) propagates, a multiplexing part (6) for multiplexing optical signals output from the first waveguide and the second waveguide, and an optical signal output part (7) for outputting optical signals multiplexed by the multiplexing part; a drive signal system (11) for obtaining a first drive signal (9) for driving the first waveguide and a second drive signal (10) for driving the second waveguide; and a bias signal system (14) for obtaining bias signals (12,13) applied to the first waveguide and the second waveguide, wherein the first drive signal (9) and the second drive signal (10) are obtained from one drive signal system (11), wherein either or both of the first waveguide and second waveguide are displaced from the condition where modulation efficiency becomes maximum in accordance with the above Formula (I), and wherein the drive signal system (11) and the bias signal system (14) drive the first drive signal (9), the second drive signal (10) and the bias signals (12,13) in accordance with the above Formula (I).

**Effect of the Invention**

According to the present invention, an optical frequency comb can be generated having flat spectral properties with a single optical modulator by driving the optical modulator according to prescribed conditions. Thus, compared to an optical frequency comb generator using a Mach-Zehnder optical modulator applying two types of drive signals (modulated signals), the optical frequency comb generator according to the present invention has a simple structure and a simple drive system, and is also easy to operate as it is not necessary to be driven by two modulated signals.

As the present invention can provide an optical pulse generator using the optical frequency comb generator as described above, an optical pulse generator having the effect as described above can be provided.

**The Best Mode for Carrying Out the Invention**

[Optical frequency comb generator]

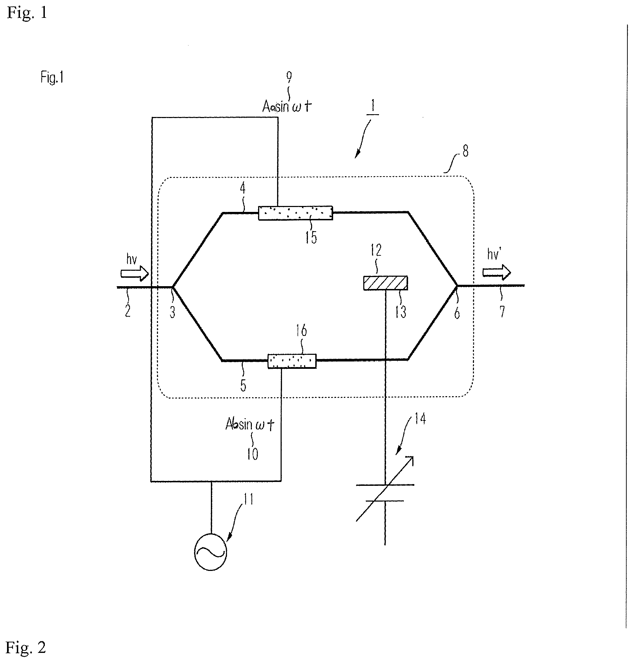

Hereinafter, an optical frequency comb generator will be described with reference to the accompanying drawings. Fig. 1 is a schematic diagram of an optical frequency comb generator described herein. As shown in Fig. 1, an optical frequency comb generator (1) comprises: an optical input part (2), a branching part (3) for branching light from the optical input part, a first waveguide (4) through which light branched by the branching part (3) propagates, a second waveguide (5) through which other light branched by the branching part (3) propagates, a multiplexing part (6) for multiplexing optical signals output from the first waveguide and the second waveguide, and an optical signal output part (7) for outputting optical signals multiplexed by the multiplexing part; a drive signal system (11) for obtaining a first drive signal (9) for driving the first waveguide and a second drive signal (10) for driving the second waveguide; and a bias signal system (14) for obtaining bias signals (12,13) applied to the first waveguide and the second waveguide.

The first drive signal (9) and the second drive signal (10) are obtained from one drive signal system (11). The length $l_1$ of a first modulated electrode (15) provided along the first waveguide (4) and the length $l_2$ of a second modulating electrode (16) provided along the second waveguide (5) are different. The drive signal system (11) and the bias signal system (14) drive the first drive signal (9), the second drive signal (10) and the bias signals (12,13) in accordance with the following Formula (I):

$$\Delta A \pm \Delta \theta = \pi/2 \qquad (\text{I})$$

(where $\Delta A$ and $\Delta \theta$ are defined, respectively, as $\Delta A \equiv (A_1 - A_2)/2$ and $\Delta \theta \equiv (\theta_1 - \theta_2)/2$ $A_1$ and $A_2$ indicate, respectively, optical phase shift amplitudes induced by the first drive signal and the second drive signal when input into the electrodes, and $\theta_1$ and $\theta_2$ indicate, respectively, optical phase shift amounts induced by optical length differences, bias signals, etc. within the first waveguide and the second waveguide..) Namely, the optical frequency comb generator of this example comprises the drive signal system (11) and the bias signal system (14) for driving the first drive signal (9), the second drive signal (10), and the bias signals (12,13) as shown in the above Formula (I).

As described later, by driving in order to the above Formula (I), an optical frequency comb having flat spectral properties with mutually complemented optical signals from two multiplexed phase modulators (the phase modulators are made up of waveguides and electrodes where drive signals are applied) can be obtained.

In case the drive signals meet Formula (I), $l_1$ and $l_2$ may ideally be configured to meet the below-mentioned formula.

Also described herein is an optical frequency comb generator as described above, wherein the optical frequency comb generator drives in accordance with the following Formula (II):

$$\Delta A = \Delta \theta = \pi/4 \qquad (\text{II})$$

(where ΔA and Δθ are defined synonymously above.) Namely, the optical frequency comb generator of this example comprises the drive signal system (11) and the bias signal system (14) for driving the first drive signal (9), the second drive signal (10), and the bias signals (12,13) as shown in the above Formula (II).

As Formula (II) meets Formula (I), by driving in accordance with Formula (II), an optical frequency comb having flat spectral properties can be obtained. Furthermore, as described later, by driving in accordance with Formula (II), an optical frequency comb having flat spectral properties can effectively be obtained.

A Mach-Zehnder waveguide, and an optical modulator (Mach-Zehnder modulator) comprising a Mach-Zehnder waveguide and a drive signal system, are known. Therefore, an optical frequency comb generator can easily be produced using a known Mach-Zehnder waveguide and a drive signal system. Each of the two post-branch waveguides consisting of a Mach-Zehnder waveguide is also referred to as "arm". A Mach-Zehnder waveguide comprises approximately hexagonally-shaped waveguides (they make up two arms), for example, and is made up with two parallel phase modulators. A phase modulators can be attained by an electrode along a waveguide.

The amounts of optical phase shift induced by both arms in a Mach-Zehnder waveguide are different, and thus frequency period against the applied voltage of frequency components induced in each arm is also different. By controlling drive voltage so that the frequency phase difference against the drive voltage may become 90 degrees between both arms and thus configuring the resulting vector intensity of the generated respective frequency components to a constant value, frequency dependency of optical intensity at the multiplexed optical spectrum can be lessened. As a result, a flat optical frequency comb can be obtained. As an optical comb can generate an optical pulse signal corresponding to the bandwidth, an optical frequency comb generator can also be referred to as an ultrahigh precision multifrequency optical pulse generator. Therefore, also described herein is a multifrequency optical pulse generator appropriately comprising a configuration of the above optical frequency comb generator.

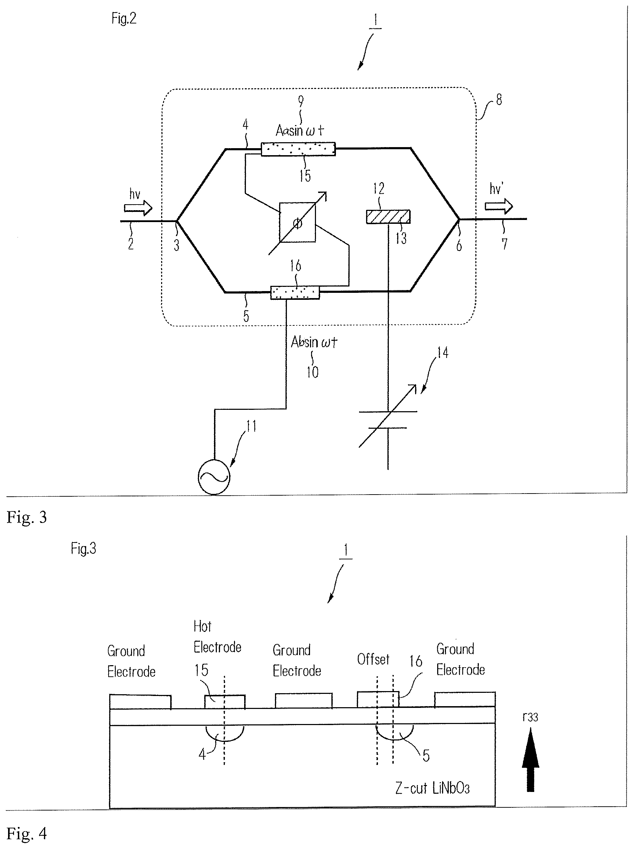

Fig. 2 is a schematic diagram showing a preferred configuration of an optical frequency comb generator of another embodiment of the present invention. In Fig. 1, drive signals are branched from the drive signal system, and the branched drive signals are applied to each of the first modulated electrode (15) and the second modulated electrode (16). However, in the subject embodiment, output from the drive signals applied to any of the modulating electrodes is applied to other electrode(s). At that time, the phase may be adjusted so that the applied modulated signals may be opposite phase (or coordinate phase). Specifically, the drive signals from the drive signal system (11) may be input into the second modulated electrode (16) and the modulated signals output from the second modulated electrode (16) may be input into the first modulated electrode (15) while driving the signals in accordance with Formula (I) or Formula (II). The modulated signals applied to the second modulated electrode (16) and the modulated signals applied to the first modulated electrode (15) are preferably applied so as to be in-phase. Even in this case, modulation efficiency can be adjusted by adjusting the length of the first modulated electrode (15) and that of the second modulated electrode (16). Modulation efficiency can also be adjusted by adjusting the cross-section structure of the electrodes. In this way, drive signals from the drive signal system (11) are input into the second modulated electrode (16) and the modulated signals output from the second modulated electrode (16) are input into the first modulate electrode (15), thereby improving power efficiency by around 3dB.

[Description of each component]

Hereinafter each component of an optical frequency comb generator of the present invention will be described.

A light source used in an optical frequency comb generator of the present invention includes a light source capable of outputting continuous light (CW) such as a distributed-feedback semiconductor laser (DFB laser). An automatic power control DFB laser is preferable as it has high wavelength selectivity. An optical bandwidth may be C-band as well as its long-wavelength L-band or its short-wavelength S-band. An optical intensity may be 1mW-50mW, for example.

As a waveguide used in an optical frequency comb generator of the present invention, any known waveguide used in an optical modulator can be used appropriately. A preferred embodiment of an optical modulator of the present invention is a Mach-Zehnder optical modulator. Thus, hereinafter a waveguide will be described focusing on a Mach-Zehnder optical modulator. Typically, a Mach-Zehnder waveguide or an electrode is provided on a substrate. A substrate or each waveguide is not particularly limited as far as they can propagate light. For example, a Ti diffusion lithium-niobate waveguide may be formed on a LN ($LNbO_3$) substrate. Alternatively, a silicon dioxide ($SiO_2$) waveguide may be formed on a silicon (Si) substrate. Otherwise, an optical semiconductor waveguide wherein an InGaAsP or GaAlAs waveguide is formed on an InP or GaAs substrate may be used.

Fig. 3 is a schematic diagram showing a waveguide having an asymmetric cross-section described herein. Fig. 3 shows an example of a Z-cut waveguide. In case a waveguide has such a cross-section, the length of the first modulated electrode and the second modulated electrode may be the same, or the length of these electrodes may be different as shown in Fig. 1 or Fig. 2. Fig. 3 shows an example of a Z-cut LN waveguide, in the upper side of which a hot electrode is provided. And the second waveguide (5) is displaced from the position where modulation efficiency becomes maximum. In Fig. 3, if the distance from the centrally-located ground electrode to the center of the electrode (16) is defined as 1, the second waveguide (5) may be displaced from the position where modulation efficiency becomes maximum by between equal to or more than 0.1 l and equal to or less than 1 1, preferably by between equal to or more than 0.2 1 and equal to or less than 0.5 1, more preferably by between equal to or more than 0.3 1 and equal to or less than 0.4 1. Note, however, that such displacement is not particularly limited as far as it can be adjusted in accordance with the above Formula (I).

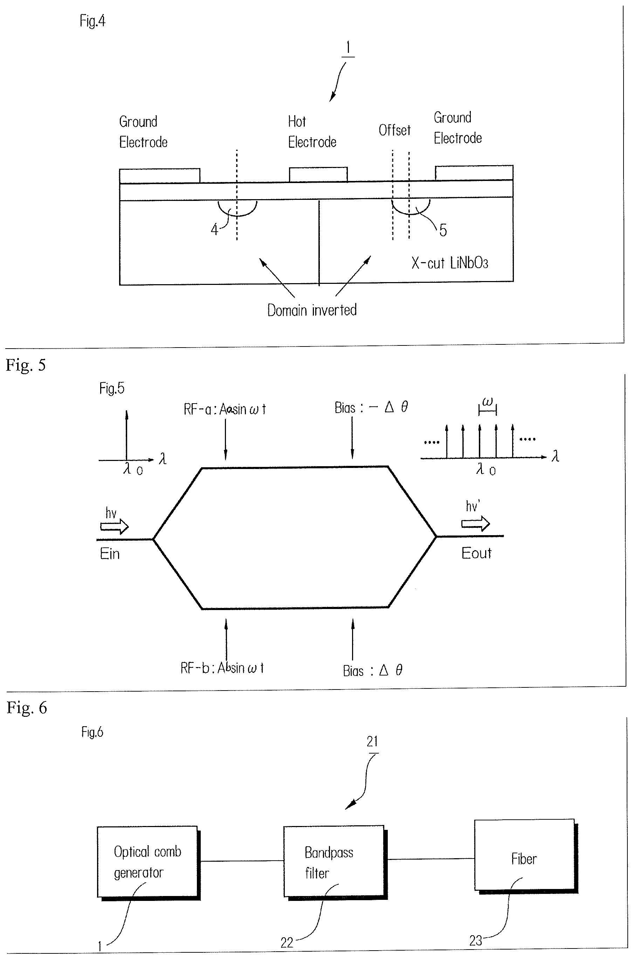

Fig. 4 is a schematic diagram showing a waveguide having an asymmetric cross-section described herein. Fig. 4 shows an example of an X-cut waveguide. In this case, the substrate polarization may appropriately be inverted at the position of the centrally-located hot electrode. Fig. 4 shows an example of a waveguide having a hot electrode at the center and ground electrodes across two waveguides. Also in this case, as mentioned above, if the distance from the centrally-located ground electrode to the center of the electrode (16) is defined as 1, the second waveguide (5) may be displaced from the position where modulation efficiency becomes maximum by between equal to or more than 0.1 l and equal to or less than 1 1, preferably by between equal to or more than 0.2 1 and equal to or less than 0.5 1, more preferably by between equal to or more than 0.3 1 and equal to or less than 0.4 1. Note, however, that such displacement is not particularly limited as far as it can be adjusted in accordance with the following Formula (I). As the use of a domain inverted (crystal-axis inverted structure) ferroelectric crystal (LN crystal) can apply in-phase and the same coded modulation to each waveguide, phase shift can be added to the ends of electrodes from one electrode, thereby generating a comb at one electrode only.

A substrate is preferably lithium niobate (LiNbO$_3$: LN) cut out to be the X-cut and Z-axis propagation. This is because such a substrate enables low-power driving through the use of a larger electro-optic effect and provides better response speed. An optical waveguide is formed on the surface of the X-cut plane (YZ-plane) of the substrate, and the guided light is propagated along the Z-axis (optic axis). Alternatively, a non-X-cut lithium niobate substrate may be used. Furthermore, as a substrate, an uniaxial crystal such as a trigonal crystal or a hexagonal crystal having an electro-optic effect, or a crystal material whose point group is $C_{3v}$, $C_3$, $D_3$, $C_{3h}$ or $D_{3h}$ can be used. These materials have the refractive index adjusting function to change the refractive index to opposite code according to the mode of propagation light by applied electric field. As concrete examples, lithium tantalate (LiTO$_3$: LT), P-BaB$_2$O$_4$ (or BBO), LiIO$_3$, etc. can be used in addition to lithium niobate.

A modulated electrode is preferably connected with a high frequency electrical signal source. The high frequency electrical signal source is a device for generating a signal transmitted to a modulated electrode, and any known high frequency electrical signal source can be used. A frequency ($f_m$) of a high frequency signal input into the modulated electrode includes a range of 1 GHz - 100 GHz, for example. Output of a high frequency electric signal source includes sinusoidal wave having a constant frequency. A phase modulator is preferably provided at the high frequency electric signal source so as to control the phase of an output signal. In some cases, the electric signals output from the high frequency electric signal source are branched, and one side of branched electric signals is applied to the modulated electrode with the phase etc. adjusted by the modulator (delay device) etc.

A modulated electrode is made up of gold, platinum, etc., for example. The example of the width of a modulated electrode is 1 $\mu$m-10 $\mu$m, specifically 5 $\mu$m. The example of the length of a modulated electrode is 0.1 times to 0.9 times the wavelength of the modulated signal ($f_m$), 0.18-0.22 times, or 0.67-0.70 times, more preferably shorter than the resonant point of the modulated signal by 20-25 %. This is because with such a length, the synthesized impedance remains in an appropriate region. The example of the more specific length of a modulated electrode is 3250 $\mu$m. Hereinafter, a resonant-type electrode and a traveling-wave-type electrode are described.

A resonant-type photoelectrode (resonant-type optical modulator) is an electrode that carries out modulation using resonance of modulated signals. A known resonant-type photoelectrode can be used. One example of such a resonant-type photoelectrode is described in JPA 2002-268025 "Tetsuya Kawanishi, Satoshi Oikawa, Masayuki Oikawa, "Planar structure resonant-type optical modulator", TECHNICAL REPORT OF IEICE, IQE2001-3 (2001-05)".

A traveling-wave-type photoelectrode (traveling-wave-type optical modulator) is an electrode (modulator) that guides an optical wave and an electric signal and, during guiding, modulates light (e.g. Hiroshi Nishihara, Masamitsu Haruna, and Toshiaki Suhara, "Optical integrated circuits" (revised and updated edition), Ohmusha, pp. 119-120). A known traveling-wave-type photoelectrode can be used. Examples of such a photoelectrode are disclosed in JPA H11-295674, JPA 2002-169133, JPA 2002-40381, JPA2000-267056, JPA2000-471159, JPAH10-133159, etc.

A preferable traveling-wave-type electrode includes one that adopts a so-called symmetric grounding electrode configuration (at least a pair of grounding electrodes is provided on each side of a traveling-wave-type signal electrode). In this way, by arranging grounding electrodes symmetrically across a signal electrode, the high frequency output from the signal electrode is easily applied to the grounding electrodes arranged on either side of the signal electrode. Thus radiation of high frequency to a substrate can be suppressed.

In the present invention, if the (phase) modulation efficiencies per unit length of the first modulating electrode (15) provided along the first waveguide (4) and the second modulating electrode (16) provided along the second waveguide (5) are defined as $\kappa_1$ and $\kappa_2$, respectively, $\kappa_1$ and $\kappa_2$ are different.

Ideally, $\kappa_1$ and $\kappa_2$ may meet the following formula.

[Math 1]

$$\frac{L|\kappa_1 - \kappa_2|}{2} \pm \frac{\varepsilon|Vbias_1 - Vbias_2|}{2} = \frac{\pi}{2}$$

$\kappa_1$ and $\kappa_2$ [rad/m] indicate the (phase) modulation efficiency per unit length of each arm of the modulator, $\varepsilon$ [rad/V] indicates the modulation efficiency per unit voltage for bias voltage, and L indicates the electrode length.

$\kappa_1$ and $\kappa_2$ are not particularly limited as far as they can be adjusted in accordance with the above Math 1. A specific ratio of $\kappa_1$ to $\kappa_2$ is, for example, $1.01 \leq \kappa1/\kappa2 \leq 3$, preferably $1.1 \leq \kappa1/\kappa2 \leq 2$, more preferably $1.2 \leq \kappa1/\kappa2 \leq 1.5$. This driving with the electrodes asymmetrically arranged can meet the spectral flattening condition.

The present invention comprises a bias signal system for obtaining a first bias signal (12) for applying to the first waveguide and a second bias signal (13) for applying to the second waveguide. The bias signal system is a signal system for controlling bias voltage applied to two arms. Specifically, the bias signal system comprises a bias power system and a bias adjusting electrode. The bias adjusting electrode is an electrode connected to the bias power system for controlling optical phase propagating between two arms by controlling bias voltage between two arms. Preferably, DC signals or low frequency signals are applied to the bias adjusting electrode. The term "low frequency" in low frequency signals as used herein means the frequency range of 0 Hz-500 MHz, for example. A phase modulator that adjusts the phase of electric signals is preferably provided at the output of the signal source of the low frequency signals in order to control the phase of output signals.

The modulated electrode and the bias adjusting electrode may be configured separately. Alternatively one electrode may double as them. Namely, the modulated electrode may be connected to a feed circuit (bias circuit) for feeding combined DC signals and RF signals.

The optical frequency comb generator preferably comprises a controller connected with signal sources for each electrode electrically (or by optical signal) so as to appropriately control the timing of signals applied to each electrode or the phase. Such a controller functions so as to adjust the modulation timing of the signals applied to the modulated electrode and the bias adjusting electrode. Namely, it adjusts the modulation timing so that the modulation by each electrode is carried out for some specific signals. The adjusting time may be an appropriate value according to the distance among each electrode etc.

[Method for Producing an Optical Frequency Comb Generator]

An optical frequency comb generator of the present invention comprises a substrate, a waveguide provided on the substrate, an electrode, a signal source, etc. As a waveguide formation method, any known method can be used, such as an internal diffusion method such as a titanium diffusion method or a proton exchange method. Namely, the optical frequency comb generator of the present invention can be produced as follows, for example. First, an optical waveguide is formed by patterning titanium on the surface of a wafer of lithium niobate by photolithography and spreading titanium by thermal diffusion method. This is subject to the following conditions: the thickness of titanium is 100-2000 angstrom; diffusion temperature is 500-2000 degrees C; and diffusion time is 10-40 hours. An insulating buffer layer of silicon dioxide (thickness of 0.5-2 $\mu$m) is formed on a principle surface of the substrate. Next, an electrode with metal plating with thickness of 15-30 $\mu$m is formed thereon. Subsequently, the wafer is cut off. In this way, an optical modulator whereon a titanium-diffused waveguide is formed is produced.

Furthermore, an optical frequency comb generator can also be produced as mentioned below, for example. First, a waveguide is formed on the substrate. A waveguide can be provided on the substrate surface of lithium niobate by a proton exchange method or a titanium thermal diffusion method. For example, Ti metal stripe (length of few $\mu$m) is formed in a row on an LN substrate by photolithographic technique. Subsequently, Ti metal is diffused into the substrate by exposing the LN substrate to high temperature around 1000 degrees C. In this way, a waveguide can be formed on an LN substrate.

Also, an electrode can be produced in the same way as mentioned above. For example, in the same way as a formation of an optical waveguide, by using photolithographic technique, an electrode can be formed on both sides of a plurality of waveguides which are formed in the same breadth, the electrode being formed so that the gap between neighboring electrodes is about 1 $\mu$m-50 $\mu$m.

In case of producing an electrode using a silicon substrate, the production process, for example, is as follows. A lower cladding layer is disposed on a silicon (Si) substrate by a flame hydrolysis deposition method, the lower cladding layer being made up mostly of silicon dioxide ($SiO_2$). And then, a core layer is disposed, the core layer being made up mostly of silicon dioxide ($SiO_2$) to which germanium dioxide ($GeO_2$) is added as a dopant. Subsequently, vitrification is performed in an electric furnace. And then, an optical waveguide is formed by etching, and an upper cladding layer is disposed, the upper cladding layer being made up mostly of silicon dioxide ($SiO_2$). And then, a thin-film heater thermo-optic intensity modulator and a thin-film heater thermo-optic phase modulator are formed on the upper cladding layer.

[Condition for Spectral Flattening]

Fig. 1 shows that an optical frequency comb generator provides an optical frequency comb with a flattened optical spectrum. Fig. 5 is a diagram for explaining the concept of the optical frequency comb generation by an optical frequency comb generator of the present invention. Suppose that the RF signals that drives each arm of a Mach-Zehnder modulator are RF-a and RF-b, respectively. The amplitudes of RF-a and RF-b are supposed to be $A_a$ (which corresponds to $A_1$), and $A_b$ (which corresponds to $A_2$), respectively. Furthermore, the modulation frequency is supposed to be $\omega$. Then, RF-a and RF-b can be expressed as the following Formula (1):

$$RF\text{-}a = A_a \sin\omega t, \quad RF\text{-}b = A_b \sin\omega t \qquad (1)$$

On the other hand, if the amplitude of light input into a Mach-Zehnder modulator is $E_{in}$, the electric field $E_{out}$ by the output light of the Mach-Zehnder modulator can be represented by the following Formula (2). In Formula (2), $J_k$ (x) represents the kth-order Bessel function.
[Math 2]

$$E_{out} = \frac{1}{2} E_{in} \sum_{k=-\infty}^{\infty} [J_k(A_1) e^{jkwt+\theta_1} + J_k(A_2) e^{jkwt+\theta_2}] \qquad (2)$$

Next, conversion efficiency $\eta_k$ is defined as relative ratio of $P_k$ to $P_{in}$ wherein $P_k$ represents the intensity of the kth-order frequency comb component and $P_{in}$ represents the intensity of the input light. When the driving signals are large amplitude signals, namely when $A_i(t)$ (i = a or b) is large enough, conversion efficiency $\eta_k$ can be asymptotically approximated as shown in the following Formula (3):
[Math 3]

$$
\begin{aligned}
\eta &\equiv \frac{P_k}{P_{in}} \\
&= \frac{1}{2\pi \overline{A}} \Big[ 1 + \cos(2\Delta\theta)\cos(2\Delta A) \\
&\quad + \{\cos(2\Delta\theta) + \cos(2\Delta A)\}\cos\left\{2\overline{A} - \frac{2k\pi + 1}{2}\right\} \Big] \qquad (3)
\end{aligned}
$$

where /A(A bar), $\Delta A$, and $\Delta\theta$ are defined, respectively, as the following Formula (4):

$$/A \equiv (A_1 + A_2)/2, \quad \Delta A \equiv (A_1 - A_2)/2, \quad \Delta\theta \equiv (\theta_1 - \theta_2)/2 \qquad (4)$$

The condition for obtaining flat spectral properties is the time when $\eta_k$ is not dependent on k, namely the time when Formula (3) is independent from the modulation order k. Thus the condition for obtaining flat spectral properties is guided by the following Formula (5):

$$\Delta A \pm \Delta\theta = \pi/2 \qquad (5)$$

Therefore, in order to obtain an optical frequency comb having flat spectral properties, a Mach-Zehnder modulator may be driven so as to meet Formula (5). In Formula (5), $\pm$ may be any of plus or minus.

[Conversion Efficiency Maximization]

Next, under this spectral flattening condition, a maximization condition of conversion efficiency is sought. When Formula (5) is substituted into Formula (3), conversion efficiency $\eta_k$ can be represented by a simple formula as shown in the following Formula (6):
[Math 4]

$$\eta_k = \frac{1 - \cos 4\Delta\theta}{4\pi\bar{A}} \qquad (6)$$

Therefore, the conversion efficiency can be found to be maximized when the following Formula (7) is met:

$$\Delta A = \Delta\theta = \pi/4 \qquad (7)$$

And the maximum conversion efficiency $\eta_{k,\,max}$ when Formula (7) is met can be represented by the following Formula (8):
[Math 5]

$$\eta_{k,max} = \frac{1}{2\pi\bar{A}} \qquad (8)$$

As explained above, the condition for obtaining a flattened optical frequency comb by a Mach-Zehnder modulator can be Formula (5) ($\Delta A \pm \Delta\theta = \pi/2$). On the other hand, the condition for generating efficiency of the optical frequency comb signal generator being maximum while the above condition of spectral flatness being met is Formula (7) ($\Delta A = \Delta\theta = \pi/4$), which is the maximum flattening condition. Formula (7) means that a Mach-Zehnder is biased at $2/\pi$ point and the maximum phase difference of phase shift induced by driving sine wave signal, RF-a and RF-b, is $\pi$.

[Explanation of Operation]

The basic operation of an optical frequency comb generator described herein is shown in Fig. 5. Namely, the generator applies driving signals RF-a and RF-b as well as phases-reversed bias signals $-\Delta\theta$ and $\Delta\theta$ to two arms of a Mach-Zehnder modulator. When the central wavelength of the input optical signal is $\lambda_0$, then the output optical frequency comb signal has a plurality of frequency components deviated by frequencies (namely wavelengths) according to the frequencies of the driving signal from $\lambda_0$.

As an optical comb can generate an optical pulse signal according to the bandwidth, an optical frequency comb generator can also be referred to as an ultrahigh-precision multifrequency optical pulse generator. Namely, though the way to generate an optical pulse using an optical comb generator is known, the above optical pulse generator which uses an optical comb generator of the present invention can enjoy the effects as described above. An optical pulse generator of the present invention can appropriately adopt each component or each step of the optical frequency comb generator and the optical frequency comb generation method as described above.

Furthermore, as respective frequency components generated by an optical comb generator are in synchronization with each other and the phase components are constant, an ultrashort pulse train as well as arbitrary wavelengths can be formed by adjusting the amplitudes and phases of respective frequency components.

Fig. 6 is a schematic diagram of an optical pulse generator which is a preferred embodiment of an optical frequency comb generator of the present invention. As shown in Fig. 6, the optical pulse generator (21) comprises: an optical frequency comb generator (1) as described in any of above; a bandpass filter (22) into which output from the optical frequency comb generator is input, and a distributed fiber (23) into which output from the bandpass filter is input. Each frequency component obtained from the optical comb generator, as the output optical frequency comb is in ultraflat mode, can be represented as in the following formula:

[Math 6]

$$A_k = \frac{E_0 \sin(2\Delta\theta)}{\sqrt{2\pi\overline{A}}} , \Phi_k = \pm \frac{4k^2 - 1}{8\overline{A}}$$

In the above formula, $A_k$ indicates the amplitude of an output signal, and $\Phi_k$ (hereinafter also referred to as $\Phi$) indicates the phase of an output signal, k indicates the order of the frequency component of an output signal.

Namely, as an ultraflat comb signal is generated, the amplitude is constant regardless of the frequency order k, and the phase $\Phi$ becomes a quadratic function of the frequency order k. And, by providing phase shift -$\Phi$ (with a reverse sign) with output of the optical comb generator, the phase difference can be set to 0. In that case, time waveform becomes an impulse function, and thus short optical pulse can be synthesized. Also, as it is known that the phase shift provided by a typical single-mode fiber having wavelength dispersion is a quadratic function of the optical frequency order, the use of a fiber of appropriate length can easily provide -$\Phi$. The fiber length at that time is ideally represented by the following formula, and thus it may be set to a length L appropriately adjusted based on the ideal formula:

[Math 7]

$$L = \mp\frac{\partial^2 \Phi_k}{\partial k^2}(\beta_2 \omega_0^2)^{-1} = \mp(\beta_2 \overline{A} \omega_0^2)^{-1}$$

In the above formula, $\beta_2$ indicates the group velocity in a fiber.

Namely, an ultrashort pulsed laser such as a picosecond pulsed laser or a femtosecond pulsed laser can easily be obtained only by connecting a bandpass filter and an optical fiber to the above optical frequency comb generator.

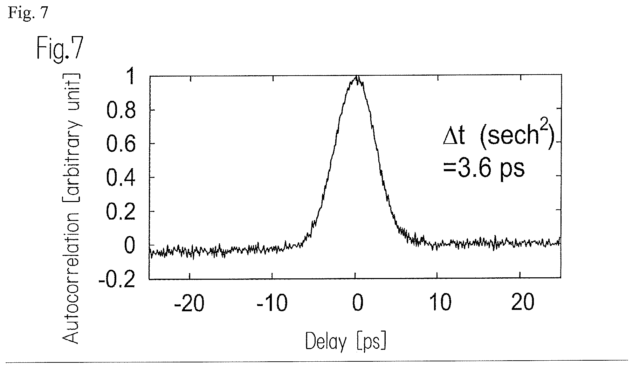

A 2.2-ps-width pulse train could be obtained through the use of an optical frequency comb generator having MZM waveguides, a laser diode (1550 nm, p=5.8 db) as a light source of the optical comb frequency generator, and a frequency of 10 GHz as a modulated signal frequency of the optical comb frequency generator. Furthermore, a bandpass filter with a bandwidth of 1 nm and a single-mode fiber of 1100 m length were used. As a result, an ultrashort pulse as shown in Fig. 7 could be obtained.

**Industrial Applicability**

The optical frequency comb generator of the present invention is expected to be applied to a multiwavelength light source in WDM transmission system or a short pulsed light source for ultrafast optical transmission/optical measurement, etc. Furthermore, the generator is also expected to be applied as a frequency reference for absolute frequency measurement, remote supply of local signals in microwave/millimeter-wave frequency bands, or a control signal for an allay antenna used in an astronomical observation system such as wireless telescope, etc.

**Brief Description of the Drawings**

Fig. 1 is a schematic diagram of an optical frequency comb generator described herein.
Fig. 2 is a schematic diagram showing a preferred configuration of an optical frequency comb generator of the present invention.
Fig. 3 is a schematic diagram showing a waveguide having an asymmetric cross-section described herein.
Fig. 4 is a schematic diagram showing a waveguide having an asymmetric cross-section described herein.
Fig. 5 is a diagram for explaining the concept of how an optical frequency comb of an optical frequency comb generator described herein is generated.
Fig. 6 is a schematic diagram of an optical pulse generator which is a preferred embodiment of an optical frequency comb generator of the present invention.
Fig. 7 is a graph of the obtained picosecond pulse as a substitute for a drawing.

**Description of the Numerals**

| | |
|---|---|
| 1 | Optical frequency comb generator |
| 2 | Input part |
| 3 | Branching part |
| 4 | First waveguide |
| 5 | Second waveguide |
| 6 | Multiplexing part |
| 7 | Output part |
| 8 | Waveguide part |
| 9 | First drive signal |
| 10 | Second drive signal |
| 11 | Drive signal system |
| 12 | Bias signal |
| 13 | Bias signal |
| 14 | Bias signal system |
| 15 | First modulated electrode |
| 16 | Second modulated electrode |
| 21 | Optical pulse generator |
| 22 | Bandpass filter |
| 23 | Distributed fiber |

**Claims**

1. An optical pulse generator comprising an optical frequency comb generator (1), the optical frequency comb generator (1) comprising:

   a waveguide part (8) comprising an optical input part (2), a branching part (3) for branching light from the optical input part, a first waveguide (4) through which light branched by the branching part (3) propagates, a second waveguide (5) through which other light branched by the branching part (3) propagates, a multiplexing part (6) for multiplexing optical signals output from the first waveguide and the second waveguide, and an optical signal output part (7) for outputting optical signals multiplexed by the multiplexing part;
   a drive signal system (11) for obtaining a first drive signal (9) for driving the first waveguide (4) and a second drive signal (10) for driving the second waveguide (5); and
   a bias signal system (14) for obtaining bias signals (12,13) applied to the first waveguide (4) and the second waveguide (5),
   wherein the first drive signal (9) and the second drive signal (10) are obtained from one drive signal system (11), wherein the length $l_1$ of a first modulated electrode (15) provided along the first waveguide (4) and the length $l_2$ of a second modulated electrode (16) provided along the second waveguide (5) are different from each other, wherein the drive signal system (11) and the bias signal system (14) drive the first drive signal (9), the second drive signal (10) and the bias signals (12,13) in accordance with the following Formula (I): $\Delta A \pm \Delta\theta = \pi/2$ (I)
   wherein $\Delta A$ and $\Delta\theta$ are defined, respectively, as $\Delta A \equiv (A_1 - A_2)/2$ and $\Delta\theta \equiv (\theta_1 - \theta_2)/2$, and $A_1$ and $A_2$ indicate, respectively, optical phase shift amplitudes induced by the first drive signal and the second drive signal when input into the electrodes, and $\theta_1$ and $\theta_2$ indicate, respectively, optical phase shift amounts induced by optical length differences and bias signals within the first waveguide and the second waveguide,
   wherein the drive signal system (11) inputs the second drive signal (10) into the second modulated electrode (16), and the second drive signal (10) output from the second modulated electrode (16) is input into the first modulated electrode (15) as the first drive signal (9); the optical pulse generator
   further comprising a bandpass filter into which output from the optical frequency comb generator is input, and a distributed fiber, wherein the distributed fibre is a single mode fibre with a negative wavelength dispersion, into which output from the bandpass filter is input.

2. The optical pulse generator as claimed in Claim 1, wherein the waveguide part (8) is a Mach-Zehnder waveguide.

**Patentansprüche**

1. Optischer Impulsegenerator, umfassend einen optischen Frequenzkammgenerator (1), wobei der optische Frequenzkammgenerator (1) Folgendes umfasst:

ein Wellenleiterteil (8), das ein optisches Eingangsteil (2), ein Verzweigungsteil (3) zum Verzweigen des Lichts aus dem optischen Eingangsteil, einen ersten Wellenleiter (4), durch den sich verzweigtes Licht durch den Verzweigungsteil (3) ausbreitet, einen zweiten Wellenleiter (5), durch den sich anderes verzweigtes Licht durch den Verzweigungsteil (3) ausbreitet, ein Multiplexteil (6) zum Multiplexieren von optischen Ausgangssignalen aus dem ersten Wellenleiter und zweiten Wellenleiter und ein optisches Ausgangssignalteil (7) zum Ausgeben von optischen Signalen, die durch den Multiplexteil multiplexiert wurden;
ein Ansteuersignalsystem (11) zum Erhalten eines ersten Ansteuersignals (9) zum Ansteuern des ersten Wellenleiters (4) und eines zweiten Ansteuersignals (10) zum Ansteuern des zweiten Wellenleiters (5); und ein Vorspannsignalsystem (14) zum Erhalten von Vorspannsignalen (12, 13), die auf den ersten Wellenleiter (4) und den zweiten Wellenleiter (5) zugeführt werden, wobei das ersten Ansteuersignal (9) und das zweite Ansteuersignal (10) aus dem einen Ansteuersignalsystem (11) erhalten werden, wobei sich die Länge $l_1$ der ersten modulierten Elektrode (15), bereitgestellt entlang des ersten Wellenleiter (4), und die Länge $l_2$ einer zweiten modulierten Elektrode (16), bereitgestellt entlang des zweiten Wellenleiters (5), voneinander unterscheiden, wobei das Ansteuersignalsystem (11) und das Vorspannsignalsystem (14) das erste Ansteuersignal (9), das zweite Ansteuersignal (10) und die Vorspannsignale (12,13) nach der folgenden Formel (I) ansteuern: $\Delta A \pm \Delta\theta = n/2$ (I) wobei $\Delta A$ und $\Delta\theta$ jeweils definiert sind als $\Delta A \equiv (A_1-A_2)/2$ und $\Delta\theta=(\theta_1-\theta_2)/2$, und $A_1$ und $A_2$ zeigen jeweils optische Phasenverschiebungsamplituden an, die durch das erste Ansteuersignal und das zweite Ansteuersignal bei Eingabe in die Elektroden erzeugt werden, und $\theta_1$ und $\theta_2$ zeigen jeweils optische Phasenverschiebungsmengen an, die durch die optischen Längenunterschiede und Vorspannsignale innerhalb des ersten Wellenleiters und des zweiten Wellenleiters erzeugt werden, wobei das Ansteuersignalsystem (11) das zweite Ansteuersignal (10) in die zweite modulierte Elektrode (16) eingibt, und das zweite Ausgangsansteuersignal (10) aus der zweiten modulierten Elektrode (16) in die erste modulierte Elektrode (15) als das erste Ansteuersignal (9) eingegeben wird;
wobei der optische Impulsgenerator ferner einen Bandpassfilter, in dem Ausgänge aus dem optischen Frequenzkammgenerator eingegeben werden und eine Verteilfaser umfasst, wobei die Verteilfaser eine Einmodenfaser mit einer negativen Wellenlängendispersion ist, in die Ausgänge aus dem Bandpassfilter eingegeben werden.

2. Optischer Impulsegenerator nach Anspruch 1, wobei der Wellenleiterteil (8) ein Mach-Zehnder Wellenleiter ist.

**Revendications**

1. Générateur d'impulsions optiques comprenant un générateur en peigne de fréquences optiques (1), le générateur en peigne de fréquences optiques (1) comprenant :

une partie de guide d'ondes (8) comprenant une partie d'entrée optique (2), une partie de dérivation (3) destinée à dériver une lumière provenant de la partie d'entrée optique, un premier guide d'ondes (4) à travers lequel une lumière dérivée par la partie de dérivation (3) se propage, un deuxième guide d'ondes (5) à travers lequel une autre lumière dérivée par la partie de dérivation (3) se propage, une partie de multiplexage (6) destinée à multiplexer des signaux optiques sortis depuis le premier guide d'ondes et le deuxième guide d'ondes, et une partie de sortie de signaux optiques (7) destinée à sortir des signaux optiques multiplexés par la partie de multiplexage ;
un système de signal d'entraînement (11) destiné à obtenir un premier signal d'entraînement (9) pour entraîner le premier guide d'ondes (4) et un deuxième signal d'entraînement (10) pour entraîner le deuxième guide d'ondes (5) ; et un système de signal de polarisation (14) destiné à obtenir des signaux de polarisation (12, 13) appliqués au premier guide d'ondes (4) et au deuxième guide d'ondes (5), dans lequel le premier signal d'entraînement (9) et le deuxième signal d'entraînement (10) sont obtenus à partir d'un système de signal d'entraînement (11), dans lequel la longueur $l_1$ d'une première électrode modulée (15) prévue le long du premier guide d'ondes (4) et la longueur $l_2$ d'une deuxième électrode modulée (16) prévue le long du deuxième guide d'ondes (5) sont différentes l'une de l'autre, dans lequel le système de signal d'entraînement (11) et le système de signal de polarisation (14) entraînent le premier signal d'entraînement (9), le deuxième signal d'entraînement (10) et les signaux de polarisation (12, 13) selon la formule (I) suivante : $\Delta A \pm \Delta\theta = \pi/2$ (I) où $\Delta A$ et $\Delta\theta$ sont définis,

respectivement, comme $\Delta A \equiv (A_1 - A_2)/2$ et $\Delta\theta = (\theta_1 - \theta_2)/2$, et $A_1$ et $A_2$ indiquent, respectivement, des amplitudes de décalages de phase optique induits par le premier signal d'entraînement et le deuxième signal d'entraînement lorsqu'ils sont entrés dans les électrodes, et $\theta_1$ et $\theta_2$ indiquent, respectivement, des quantités de décalages de phase optique induits par des différences de longueur optique et des signaux de polarisation dans le premier guide d'ondes et le deuxième guide d'ondes, dans lequel le système de signal d'entraînement (11) fait entrer le deuxième signal d'entraînement (10) dans la deuxième électrode modulée (16), et le deuxième signal d'entraînement (10) sorti de la deuxième électrode modulée (16) est entré dans la première électrode modulée (15) en tant que le premier signal d'entraînement (9) ;

le générateur d'impulsions optiques comprenant en outre un filtre passe-bande dans lequel une sortie du générateur en peigne de fréquences optiques est entrée, et une fibre distribuée, dans lequel la fibre distribuée est une fibre monomode avec une dispersion de longueur d'onde négative, dans laquelle une sortie provenant du filtre passe-bande est entrée.

2. Générateur d'impulsions optiques selon la revendication 1, dans lequel la partie de guide d'ondes (8) est un guide d'ondes Mach-Zehnder.

Fig. 1

Fig.1

Fig. 2

Fig.2

9

Aasin ω t

4

8

15

hv

12

hv'

2 3

Ø

13

6 7

16

5

Absin ω t

10

14

11

Fig. 3

Fig.3

1

Hot
Electrode

Ground
Electrode

15

Ground
Electrode

Offset 16

Ground
Electrode

r33

4

5

Z-cut LiNbO3

Fig. 4

**Fig.4**

Ground Electrode     Hot Electrode    Offset    Ground Electrode

X-cut LiNbO3

Domain inverted

**Fig. 5**

Fig.5

RF-a : Aasin $\omega$ t     Bias : $-\Delta\theta$

$\lambda_0$    $\lambda$

hv    Ein

hv'    Eout

RF-b : Absin $\omega$ t     Bias : $\Delta\theta$

**Fig. 6**

Fig.6

21

Optical comb generator     Bandpass filter     Fiber

1     22     23

Fig. 7

Fig.7

**EP 2 239 620 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0387832 A1
- JP 2002268025 A
- JP H11295674 A
- JP 2002169133 A
- JP 2002040381 A
- JP 2000267056 A
- JP 2000471159 A
- JP H10133159 A

### Non-patent literature cited in the description

- **W. D. JEMISON et al.** *MWP,* 2001, vol. 01, 169-172
- **J. M. PAYNE ; W. P. SHILLUE.** *MWP,* 2002, vol. 02, 9-12
- **M. SUGIYAMA et al.** *OFC'02, FB6,* 2002
- **T. SAKAMOTO et al.** *MWP'04, MC16,* 2004
- **T. KAWANISHI et al.** *IEICE Electron Express,* 2004, vol. 1, 217-221
- **TAKAHIDE SAKAMOTO et al.** Electro- Optic Ultra- Flat Comb Generation Using Mach- Zehnder Modulator in Push- Pull Operation Mode. *LEOS 2007,* 01 October 2007, 525-526
- **TAKAHIDE SAKAMOTO et al.** Asymptotic formalism for ultraflat optical frequency comb generation using a Mach-Zehnder modulator. *Optics Letters,* 01 June 2007, vol. 32 (11), 1515-1517
- **TAKAHIDE SAKAMOTO et al.** Picosecond Pulse Generation with a Single-Stage Standard Mach-Zehnder Modulator Employed. *ECOC 2006,* 24 September 2006, 1-2
- **TETSUYA KAWANISHI ; SATOSHI OIKAWA ; MASAYUKI OIKAWA.** Planar structure resonant-type optical modulator. *TECHNICAL REPORT OF IEICE, IQE2001-3,* May 2001
- **HIROSHI NISHIHARA ; MASAMITSU HARUNA ; TOSHIAKI SUHARA.** Optical integrated circuits. 119-120